# EUROPEAN PATENT APPLICATION

(11) **EP 4 561 071 A1**
(43) Date of publication of application: **28.05.2025**
(21) Application number: 24210799.3
(22) Date of filing: 05.11.2024
(51) Int. Cl.: H04N 19/44, H04N 19/46, G06N 3/045

(54) **APPARATUS, SYSTEMS AND METHODS FOR IMAGE PROCESSING**

(30) Priority: 23.11.2023 GB 202317895
(71) Applicant: Sony Interactive Entertainment Inc., Tokyo 108-0075 (JP)
(72) Inventor: AMADORI, Pierluigi Vito, London, W1F 7LP (GB); BRADLEY, Timothy Edward, London, W1F 7LP (GB); RAINA, Ayush, San Mateo, CA 94404 (US); MOSS, Guy David, London, W1F 7LP (GB); SPICK, Ryan John, London, W1F 7LP (GB)
(74) Representative: D Young & Co LLP

(57) **Abstract**

A decoder apparatus comprises receiving circuitry to receive caption data indicative of a language-based description for a first image and encoded data representative of the first image; and decoder circuitry comprising one or more trained machine learning models operable to generate a reconstructed image in dependence on the caption data and the encoded data, the reconstructed image having a higher image quality than an image quality associated with the encoded data representative of the first image.

## Description

### Field of the Disclosure

The present disclosure relates to apparatus, systems and methods for image processing.

### Background

The "background" description provided herein is for the purpose of generally presenting the context of the disclosure. Work of the presently named inventors, to the extent it is described in this background section, as well as aspects of the description which may not otherwise qualify as prior art at the time of filing, are neither expressly or impliedly admitted as prior art against the present invention.

Digital image compression plays an important role in the transmission and storage of digital image data. Image compression addresses problems associated with reducing an amount of information required to represent a digital image. Image compression is the process of effectively coding digital images to reduce the number of bits required to represent an image. Generally, image compression is intended to yield a more compact representation of an image so as to allow reduction of storage and transmission requirements. For example, such compression can allow transmission of image data at lower bandwidths and minimizes a space requirement for storage of such data. Similarly, image compression techniques can be extended for compression of video data. Digital image content may be stored and transmitted in a variety of formats. Factors to be considered for this include image resolution, frame rate (in the case of video content), coding format, compression scheme, and compression factor.

Image compression algorithms can be broadly classified into lossless and lossy compression algorithms. A lossless compression algorithm generally allows recovering of an original image without loss of information. Lossless compression generally is achievable by exploiting statistical redundancies, however with lossless compression there is generally a restriction on an amount of compression (e.g. compression ratio) that is available. A compression ratio refers to a ratio of an uncompressed data size to a compressed data size. Some lossless compression algorithm may have a compression ratio of the order of 3:1, for example.

Lossy compression algorithms generally yield an encoded representation of an original image with some amount of information being lost. A decompression algorithm generally processes the encoded representation to generate a reconstruction of the original image. Lossy compression techniques permit reconstruction of an approximation of the original image and can allow for much larger compression ratios than that for lossless compression, whilst still permitting recovery of reconstructed images with acceptable quality. Lossy compression techniques are thus particularly useful for allowing storing and transmission of images with reduced processing requirements and have many benefits for streaming of live and/or recorded video content.

Whilst it is generally desirable to reduce an amount of data to be stored and or transmitted, there is need for this to be balanced against a requirement to reconstruct an image with acceptable quality.

It is in this context that the present disclosure arises.

### Summary

Various aspects and features of the present invention are defined in the appended claims and within the text of the accompanying description.

### Brief Description of the Drawings

The present technique will be described further, by way of example only, with reference to embodiments thereof as illustrated in the accompanying drawings, in which:
Figure 1 is a schematic diagram illustrating an example of an entertainment device;
Figure 2 is a schematic diagram of a traditional encoder-decoder arrangement;
Figure 3 is a schematic diagram illustrating an encoding apparatus;
Figure 4 is a schematic diagram illustrating a decoding apparatus;
Figure 5 is a schematic diagram illustrating an example system;
Figure 6 is a schematic diagram illustrating the encoding apparatus in more detail;
Figure 7 is a schematic diagram illustrating decoding circuitry comprising a trained decoder model and a trained image captioning model;
Figure 8 is a schematic diagram illustrating another possible configuration for the decoding circuitry;
Figure 9 is a schematic flowchart illustrating a method for performing two or more repeated updates to the trained decoder model;
Figure 10 is a schematic flowchart illustrating a method for decoding; and
Figure 11 is a schematic flowchart illustrating a method for encoding and decoding.

Embodiments of the invention will now be described, by way of example only, with reference to the accompanying drawings, in which:

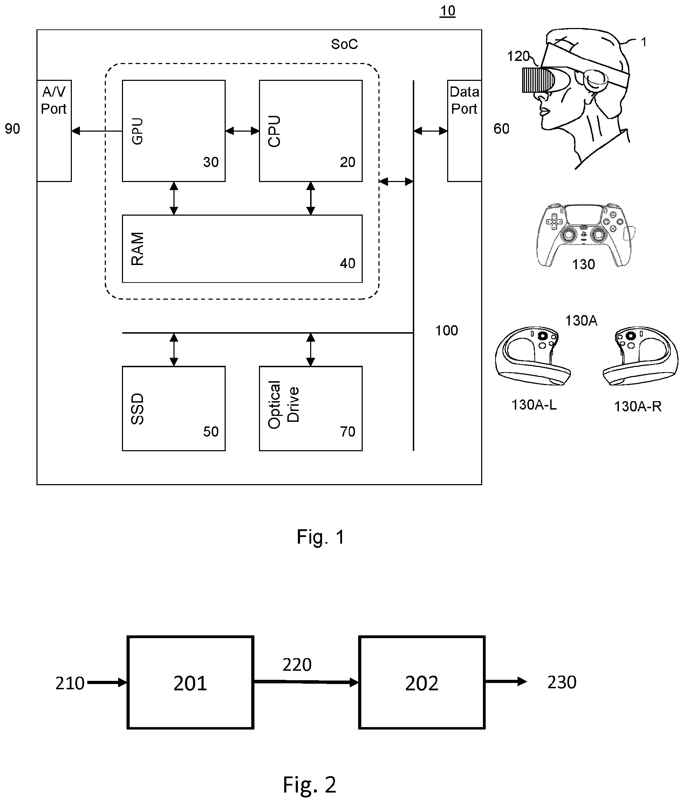

Figure 1 schematically illustrates an example entertainment device 10 such as a computer, video game console or other similar device. A system unit 10 is provided, with various peripheral devices connectable to the system unit.

The entertainment device 10 comprises a central processor 20. This may be a single or multi core processor. The entertainment device also comprises a graphical processing unit or GPU 30. The GPU can be physically separate to the CPU, or integrated with the CPU as a system on a chip (SoC).

The GPU, optionally in conjunction with the CPU, may process data and generate video images (image data) and optionally audio for output via an AV output. Optionally, the audio may be generated in conjunction with or instead by an audio processor (not shown).

The video and optionally the audio may be presented to a television or other similar device. Where supported by the television, the video may be stereoscopic. The audio may be presented to a home cinema system in one of a number of formats such as stereo, 5.1 surround sound or 7.1 surround sound. Video and audio may likewise be presented to a head mounted display unit worn by a user.

The entertainment device also comprises RAM 40, and may either have separate RAM for each of the CPU and GPU, or shared RAM. The or each RAM can be physically separate, or integrated as part of an SoC. Further storage is provided by a disk 50, either as an external or internal hard drive, or as an external solid state drive, or an internal solid state drive.

The entertainment device may transmit or receive data via one or more data ports 60, such as a USB port, Ethernet^{®} port, Wi-Fi^{®} port, Bluetooth^{®} port or similar, as appropriate. It may also optionally receive data via an optical drive 70.

Audio/visual outputs from the entertainment device are typically provided through one or more A/V ports 90, or through one or more of the wired or wireless data ports 60.

An example of a device for displaying images output by the entertainment device is a head mounted display 'HMD' 120 worn by a user 1. The images output by the entertainment device may be displayed using various other devices - e.g. using a conventional television display connected to A/V ports 90.

Where components are not integrated, they may be connected as appropriate either by a dedicated data link or via a bus 100.

Interaction with the device is typically provided using one or more handheld controllers, examples of which may include controller 130 and/or one or more VR controllers 130A-L, 130A-R. The user typically interacts with the system by providing inputs via the handheld controllers 130, 130A. For example, when playing a game, the user may navigate around the game environment by providing inputs using the handheld controllers 130, 130A.

Figure 1 therefore provides an example of a data processing apparatus suitable for executing a program, such as a video game, in accordance with user inputs.

Figure 2 schematically illustrates a traditional encoder-decoder arrangement. An encoder device 201 receives image data 210 for one or more images. Image data 210 may be stored by the encoder device 201 and/or input to the encoder 201 from another associated device. The encoder device 201 performs image compression to obtain encoded data 220, the encoded data 220 being representative of the received image data 210. The encoder device 201 outputs the encoded data 220 for reception by a decoder device 202. The decoder device 202 performs image decompression with respect to the encoded data 220 to obtain a reconstruction 230 of the image data 210. In the case of lossless compression, the decoder device 202 is operable to obtain the reconstruction of the original image data without loss of information. In the case of lossy compression, the decoder device 202 is operable to obtain the reconstruction of the original image data with loss of information relative to the original image data.

For lossy image compression there is generally a trade-off in that a greater compression ratio correlates with lower image quality. Consequently, for conventional techniques this trade-off represents a limit to a compression ratio that may be used.

Embodiments of the disclosure provide apparatus, systems and methods that can improve over standard image compression techniques by using machine learning techniques.

In particular, embodiments of the disclosure provide an encoder apparatus for generating encoded data representative of an image and caption data indicative of a language-based description of the image. Embodiments of the disclosure also provide a decoder apparatus that uses machine learning for obtaining a reconstructed image. The encoded data representing the original image and the associated caption data are used by one or more machine learning models of the decoder apparatus to generate the reconstructed image.

The associated caption data provides a language-based description that can assist in providing natural language guided decoding of the encoded data by the decoder apparatus. In this way, encoded data having a potentially low image quality can be communicated and an image of a higher image quality can be reconstructed at a decoder side using the associated caption data.

For example, use of a potentially large compression factor (that may otherwise have potentially not been suitable due to unacceptable loss of quality) can be permitted. In some cases, a given image may firstly be subjected to an image quality reduction process (e.g. image resolution reduction processing such as image downscaling) and then compressed using a lossless or lossy compression technique. Alternatively or in addition, a lossy compression using a potentially large compression factor may be used to obtain the encoded data having the low image quality. Hence more generally, encoded data having an associated image quality and associated caption data can be provided to a decoder, and the caption data indicative of the language-based description can assist in allowing an improvement of the quality of the generated reconstructed image relative to a comparative case in which the encoded data is provided on its own.

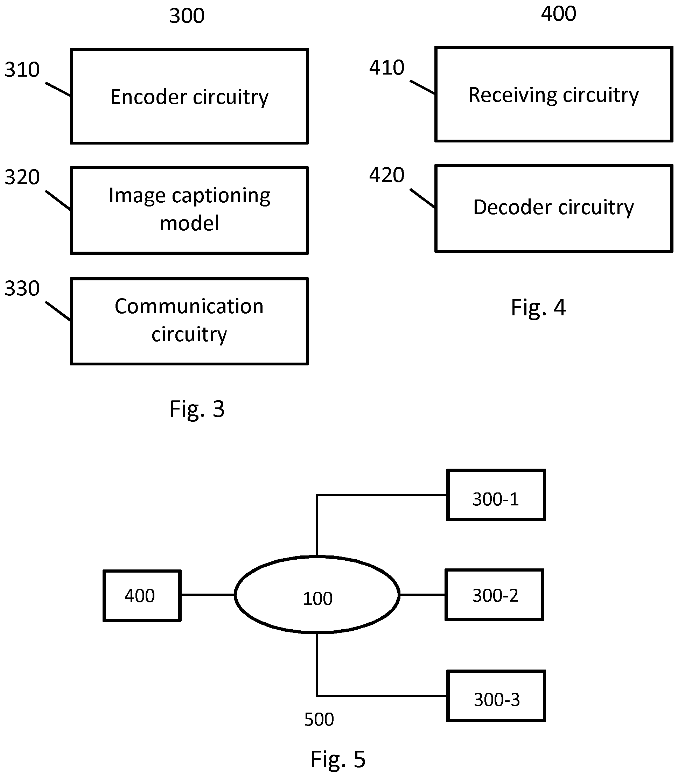

Figure 3 schematically illustrates a data processing apparatus (herein referred to as an encoder apparatus 300) in accordance with embodiments of the disclosure. The encoder apparatus 300 comprises encoder circuitry 310, an image captioning model 320 and communication circuitry 330.

Figure 4 schematically illustrates a data processing apparatus (herein referred to as a decoder apparatus 400) in accordance with embodiments of the disclosure. The decoder apparatus 400 comprises receiving circuitry 410 and decoder circuitry 420, in which the decoder circuitry comprises one or more machine learning models. In the following discussion, the terms encoder model, decoder model, image captioning model and comparison model each refer to trained machine learning models.

Embodiments of the disclosure provide a system comprising the encoder apparatus 300 and the decoder apparatus 400. The decoder apparatus 400 is operable to receive encoded data from the encoder apparatus 300 via one or more of a wired and/or wireless network (e.g. a wireless network such as one or more of a personal area network "PAN", local area network "LAN" and a wide area network "WAN").

The encoder apparatus 300 may for example be provided as part of a user device for a first user and the decoder apparatus 400 may be provided as part of another user device for a second user. Examples of suitable user devices include laptop devices, smartphone devices, smartwatch devices, tablet devices and game console devices among others. In some examples, user devices may be connected via one or more networks such as the Internet.

The encoder apparatus 300 is operable to generate encoded data representative of one or more images. The images may relate to any suitable content such as a movie, video game or photo album. The encoded data may thus be representative of one or more images such as individual photographs or images associated with a video content. In some examples, the encoder apparatus 300 may generate encoded data representative a sequence of images associated with a video game or other similar content. Hence, in some examples the techniques discussed with respect to the encoder apparatus 300 may be performed to generate and transmit encoded data representative of images of a streamed video feed (which may be a live or recorded video feed) to provide the encoded data to another apparatus such as one or more of a user device for a user and a server device.

Figure 5 schematically illustrates an example of a system 500 comprising three encoder apparatuses 300-1, 300-2 and 300-3 and a decoder apparatus 400 that receives communications from any of the encoder apparatuses via the network 100 (which may be any suitable communications network). In the example of Figure 5, the encoder apparatuses 300-1, 300-2 and 300-3 may each correspond to a different user, and the decoder apparatus 400 may correspond to a server. For example, the decoder apparatus 400 may be provided as part of a server of an online service such as an online social media platform and/or an online gaming service (e.g. a cloud gaming service). Hence, in the example of Figure 5 each of the encoder apparatuses 300-1, 300-2 and 300-3 may generate and transmit encoded data and caption data for reception by the decoder apparatus 400.

Whilst Figure 5 shows an example system including one decoder apparatus 400 and three encoder apparatuses 300-1, 300-2 and 300-3, the number of devices is not particularly limited and other similar examples are considered. For example, the system 500 could potentially comprise a single decoder apparatus and a single encoder apparatus. Alternatively, the system 500 could potentially comprise a large number of respective apparatuses of the order of tens, hundreds or even thousands. In some examples, an encoder apparatus may communicate directly with a decoder apparatus or such communication may take place via one or more intermediate devices using one or more wireless networks such as a Bluetooth^{®}, Wi-Fi^{®} or LTE communications network.

In addition, whilst the above discussion refers to a decoder apparatus 400 and an encoder apparatus 300, it will be appreciated that in some cases a same apparatus may comprise the functionality of both the decoder apparatus 400 and the encoder apparatus 300. Hence, in some embodiments of the disclosure, a data processing apparatus is provided comprising the encoder circuitry 310, the image captioning model 320, the communication circuitry 330 and the decoder circuitry 420. The communication circuitry 330 may for example comprise transceiver circuitry capable of performing transmission and reception. Therefore, a first user may be provided with such a data processing apparatus and another user may also be provided with such a data processing apparatus for allowing exchange of encoded data and associated caption data between the two.

Referring again to Figure 3, the encoder circuitry 310 is operable to generate encoded data representative of an image. The encoder circuitry may firstly reduce an image quality associated with the image (e.g. downscaling processing) and then perform a lossy or lossless compression to obtain the encoded data such that the encoded data has an associated image quality that is reduced compared to that of the original image. In some embodiments of the disclosure, the encoder circuitry 310 is operable to perform lossy image compression of an image to generate encoded data representative of the image such that the encoded data has an associated image quality that is reduced compared to that of the original image. The encoder circuitry 310 may use any suitable lossy image compression algorithm for generating encoded data representing one or more images (or video content). For example, the encoder circuitry 310 may generate encoded data having a conventional image coding format or a conventional video coding format. In some embodiments of the disclosure, the encoded data may have a conventional image coding format such as JPEG or a conventional video coding format such as MPEG and H.264/AVC. In other embodiments of the disclosure, the encoded data may be encoded by a machine-learning based image encoder.

In some embodiments of the disclosure, the encoder circuitry 310 may comprise a trained encoder model for generating the encoded data. The trained encoder model may comprise a compressive neural network for generating the encoded data. Generally speaking, the compressive neural network may generate a compressed representation which is capable of being reconstructed by a corresponding reconstruction network so as to reconstruct the image. In some embodiments of the disclosure, a deep-learning encoder-decoder architecture is provided. For example, a trained neural network may be used such that data compression to a lower-dimensional representation is performed at the encoder apparatus 300, and a corresponding trained neural network may be used such that decompression is performed at the decoder apparatus 400 to reconstruct the original image and for which the decompression is assisted by the caption data. For example, a trained autoencoder arrangement using convolutional neural networks (CNNs) may be used for performing the lossy image compression and decompression. A CNN compressive autoencoder arrangement may comprise an encoder for reducing dimensionality and a decoder to reconstruct an image based on the encoded data.

The image captioning model 320 is operable to generate caption data indicative of a language-based description for an image. Machine learning techniques for generating a caption for an image are known and are not discussed in detail. More generally, the image captioning model 320 may recognise a context for the content in an image and generate a language-based description for the image using deep learning techniques. One or images can thus be input (or pre-processed and then input) to the image captioning model 320, and the image captioning model 320 has been trained to output caption data indicative of at least one language-based description for the one or more images. The caption data may comprise text data suitable for describing the image in one or more words. Alternatively, the caption data may comprise a representation (e.g. latent representation or latent vector) predicted by the image captioning model and which can be provided to the decoder apparatus 400 for use by one or more corresponding machine learning models.

In some embodiments of the disclosure, the encoder circuitry 310 may comprise the trained encoder model and the trained image captioning model 320. Optionally, information may be shared between the two models such as information relating to a latent space vector, information relating to parameters (such as weights) used by the models, and/or outputs of certain layers.

The communication circuitry 330 is operable to communicate the encoded data and the caption data to the decoder apparatus 400 via a network (e.g. network 100). The communication circuitry 330 may use a wired and/or wireless communication. Any suitable communication protocol may be used.

Referring again to Figure 4, in embodiments of the disclosure the decoder apparatus 400 comprises the receiving circuitry 410 and the decoder circuitry 420. The receiving circuitry 410 is operable to receive, via a network (e.g. network 100), caption data indicative of a language-based description for a first image and encoded data representative of the first image. The encoded data may have been obtained by lossy compression of the first image. Alternatively or in addition, the encoded data may have been obtained by performing compression on a lower quality version of the first image (e.g. by firstly subjecting the first image to an image quality reduction process).

The decoder circuitry 420 comprises one or more trained machine learning models operable to generate a reconstructed image in dependence on the caption data and the encoded data representative of the first image, in which the generated reconstructed image has a higher image quality than the encoded data representative of the first image. The decoder circuitry 420 may take any of a number of different forms which are discussed in more detail later.

The decoder circuitry 420 is operable to receive encoded data representative of at least one image and associated caption data indicative of a language-based description for the at least one image. Using one or more trained machine learning models, the decoder circuitry 420 is operable to generate a reconstructed image in dependence on the encoded data and the caption data, in which the reconstructed image has a higher image quality than an image quality associated with the encoded data representative of the first image.

Relative to a first comparative case in which only encoded data is provided to a decoder apparatus and a given image is reconstructed having a given image quality, the techniques of the present disclosure also provide caption data associated with the encoded data and can potentially allow a greater compression ratio to be used for the encoded data whilst still achieving an image quality that is comparable to (e.g. the same as) or greater than the given image quality. Similarly, the techniques of the present disclosure can potentially allow use of a compression ratio similar to or the same as that of the first comparative case, and by providing the caption data associated with the encoded data a reconstructed image having an improved image quality relative to the given image quality can be achieved. Similarly, the techniques of the present disclosure can advantageously allow transmission of encoded data including a compact representation for an image accompanied by the caption data, which can potentially assist in speeding up transfer between an encoder apparatus and a decoder apparatus.

Hence more generally, the techniques of the present disclosure provide associated caption data for encoded data representative of one or more images, and a decoder apparatus that is operable to generate a reconstructed image using the associated caption data for the encoded data. This can contribute to improving processing efficiency by potentially allowing storage and/or transmission of data (the encoded data and associated caption data) having a total data size that can be reduced comparative to conventional encoded data in conventional lossy compression techniques.

In some examples, the received encoded data has been obtained via lossy compression of the first image to obtain the encoded data having a predetermined image quality (e.g. predetermined image resolution lower than the original image resolution). For example, the encoder apparatus 300 may be operable to compress images according to a given compression operation to obtain encoded data having a predetermined image quality. The decoder circuitry 420 can thus be operable to generate a reconstructed image in dependence on the caption data and the encoded data representative of the first image, in which the generated reconstructed image has a higher image quality than the predetermined image quality associated with the encoded data representative of the first image.

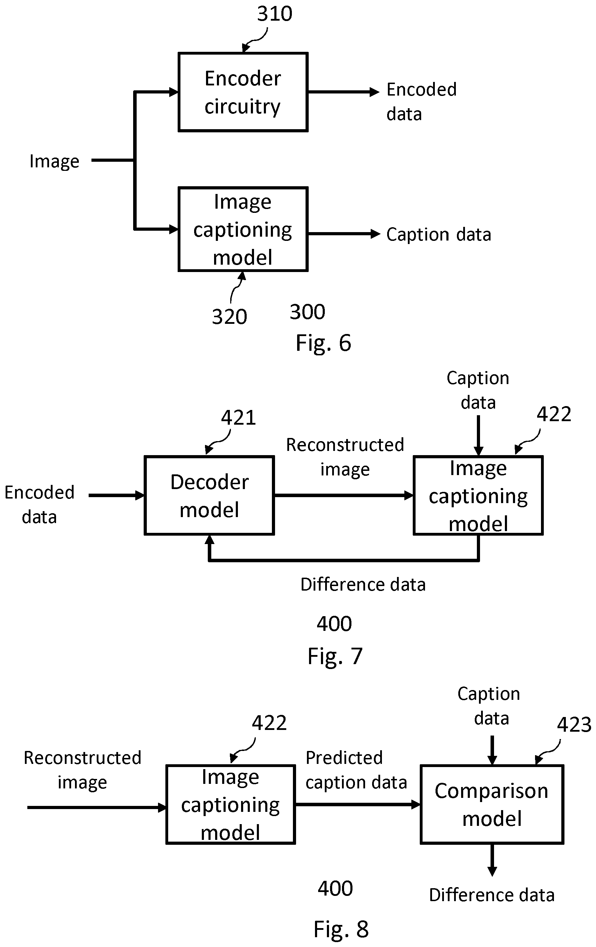

Figure 6 schematically illustrates an example of operation of the encoder apparatus 300. The encoder apparatus comprises the encoder circuitry 310 that receives an image and generates encoded data for representing the image. The encoder apparatus comprises the image captioning model 320 that receives the image and generates caption data. Hence, a same image can be input to each of the encoder circuitry 310 and the image captioning model 320 to obtain encoded data and corresponding caption data for the image. As explained above, the encoded data is obtained based on lossy compression of the image.

Figure 7 schematically illustrates a possible arrangement for the decoder apparatus 400 in which the one or more machine learning models of the decoder apparatus comprise a decoder model 421 and an image captioning model 422. The decoder apparatus 400 receives the encoded data which is input to the decoder model 421. Whilst Figure 7 shows the encoded data being input to the decoder model 421, in some cases the associated caption data may also be input to the decoder model 421. For example, the decoder model 421 may be operable to directly use the caption data together with the encoded data for generating the reconstructed image (as discussed later) and/or the decoder model 421 may pass the caption data forward for use by the image captioning model 422 according to the techniques discussed below rather than the caption data being input to the image captioning model 422 in the manner shown in Figure 7.

The decoder model 421 can thus be operable to receive the encoded data and generate a reconstructed image based on decompression of the encoded data. The image captioning model 422 is operable to receive the reconstructed image and generate predicted caption data for the reconstructed image. The predicted caption data is indicative of a language-based description for the reconstructed image. In the example of Figure 7, the image captioning model 422 is operable to generate difference data indicative of one or more differences between the predicted caption data and the initially received caption data associated with the encoded data. Hence, the difference data is thus indicative of one or more differences between the caption data for the original image and the predicted caption data for the reconstructed image generated by the decoder model 421. The decoder model 421 is operable to receive the difference data.

Figure 7 provides an example in which the image captioning model 422 is operable to generate the predicted caption data and also provide the difference data. Figure 8 schematically illustrates another possible arrangement for the decoder apparatus 400 in which the image captioning model 422 provides the predicted caption data to a comparison model 423. The comparison model may be a dedicated machine learning model specifically for comparing the initial caption data associated with the encoded data and the predicted caption data and generating the difference data. The comparison model may for example use various natural language processing (NLP) algorithms for comparing the predicted caption data against the initial caption data. Therefore, in the example of Figure 8, the image captioning model 422 may be tasked with generating the predicted caption data without having to generate the difference data.

Hence, more generally in some embodiments of the disclosure the decoder circuitry 420 comprises a trained decoder model 421 operable to receive the encoded data and generate a reconstructed image, and a trained image captioning model 422 operable to receive the reconstructed image and generate predicted caption data for the reconstructed image. In the case that the predicted caption data matches (or substantially matches) the initial caption data, the decoder circuitry 420 can be operable to output the reconstructed image. For example, the decoder circuitry 420 may output the reconstructed image to another connected device such as a display device that is either provided as part of the encoder apparatus (e.g. as in the case of a smartphone device, laptop device or tablet device having an screen) or connected to the encoder apparatus via one or more of a wired and/or wireless connection, and/or the decoder circuitry 420 may output the reconstructed image to storage circuitry (not shown in Figure 4) which may be provided as part of the decoder apparatus 400 or another connected device. More generally, the comparison of the predicted caption data and the initial caption data can be used to confirm whether the reconstructed image is an acceptable reconstruction and control whether to output the reconstructed image.

In some embodiments of the disclosure, the trained decoder model 421 is operable to update one or more parameters of the trained decoder model 421 in dependence on a difference between the predicted caption data for the reconstructed image and the received caption data.

The image captioning model 320 of the encoder apparatus 300 and the image captioning model 422 of the decoder apparatus 400 may be the same or substantially the same so that for a same input image the two models each generate same caption data. As explained previously, image captioning models are generally known and any suitable machine learning based model for analysing an image and generating a language-based description (e.g. a descriptive textual caption) may be used.

Therefore, the caption data associated with the encoded data can serve as a target for the decoder apparatus 400. Put differently, the caption data associated with the encoded data can be used as reference caption data which the decoder side seeks to obtain (either as an exact match or at least within a threshold difference) for a reconstructed image generated at the decoder side. Moreover, the decoder apparatus 400 seeks to generate a reconstructed image using the encoded data and generate predicted caption data for the generated reconstructed image with the predicted caption data ideally matching the caption data associated with the encoded data. Differences between the predicted caption data and the original caption data that is associated with the encoded data can indicate that the reconstructed image is not considered by the image captioning model 422 to be a direct match for the original image and that an update to the decoder model 421 should be carried out to improve conformity for the reconstructed image with the original image.

Language based descriptions can be particularly powerful in communication of certain detailed information that could potentially be lost when using some compression ratios (e.g. larger compression ratios). For example, detailed descriptions of one or more emotions associated with a person's face, detailed descriptions of an item in an image (e.g. a garment of clothing and one or more patterns and/or associated materials and/or textures), and/or detailed descriptions of a scene in an image are examples which may be identifiable by the image captioning model 320 in the original image and thus described but not identifiable by the image captioning model 422 in the reconstructed image due to loss of information from the lossy techniques and/or downscaling techniques.

In response to a difference between the predicted caption data for the reconstructed image and the received caption data, the decoder model 421 can be operable to update one or more parameters of the decoder model 421. For example, using backpropagation techniques a difference between the predicted caption data for the reconstructed image and the received caption data can be passed back to the decoder model for adjusting one or more parameters of the decoder model.

Hence more generally, in some embodiments of the disclosure the decoder model 421 is operable to update one or more of the parameters of the decoder model to update the decoder model to compensate for differences between the predicted caption data for the reconstructed image and the received caption data.

Subsequent to updating one or more of the parameters of the decoder model, the decoder model (i.e. the updated decoder model) can be operable to generate another reconstructed image in dependence on the encoded data using the updated parameters. Hence, the same encoded data can be used again (re-used) by the updated decoder model to generate another reconstructed image. The decoder model can thus be operable to generate a second reconstructed image for the encoded data. The image captioning model 422 can generate second predicted caption data for the second reconstructed image, in which it is expected that the second predicted caption data differs from the previous predicted caption data due to the decoder model 421 having been updated.

Similar to that discussed above, the decoder circuitry 420 can be operable to output the second reconstructed image in dependence on a comparison of the second predicted caption data for the second reconstructed image and the received caption data. Hence, if first predicted caption data for a first reconstructed image differs from the received caption data, then an update can be performed to the decoder model 421 using the difference between the first predicted caption data and the received caption data, and a second reconstructed image can be generated for the encoded data for which the second predicted caption data better matches the received caption data. In some examples, reinforcement learning techniques may be employed by the decoder model 421 for updating the decoder model to compensate for differences between two instances of caption data for which one of the instances of caption data serves as a target (or reference) instance. In some examples, the above mentioned technique may be performed to generate a reconstructed image and then generate a second reconstructed image, with the second reconstructed image being output without having generated second caption data and performing the caption comparison stage, since it may be assumed that the update to the decoder model 421 provides an acceptable reconstruction. However, in some cases two or more updates to the decoder model 421 may be used to converge towards a reconstruction.

In response to a difference between the second predicted caption data for the reconstructed image and the received caption data, the decoder model 421 can be operable to update one or more parameters of the decoder model 421. The decoder model 421 can thus be updated a second time and the above mentioned technique repeated.

Hence more generally, using the decoder model 421 and the image captioning model 422, two or more iterations of generating a reconstructed image and generating predicted caption data and updating the decoder model 421 according to a difference between predicted caption data and received caption data can be performed.

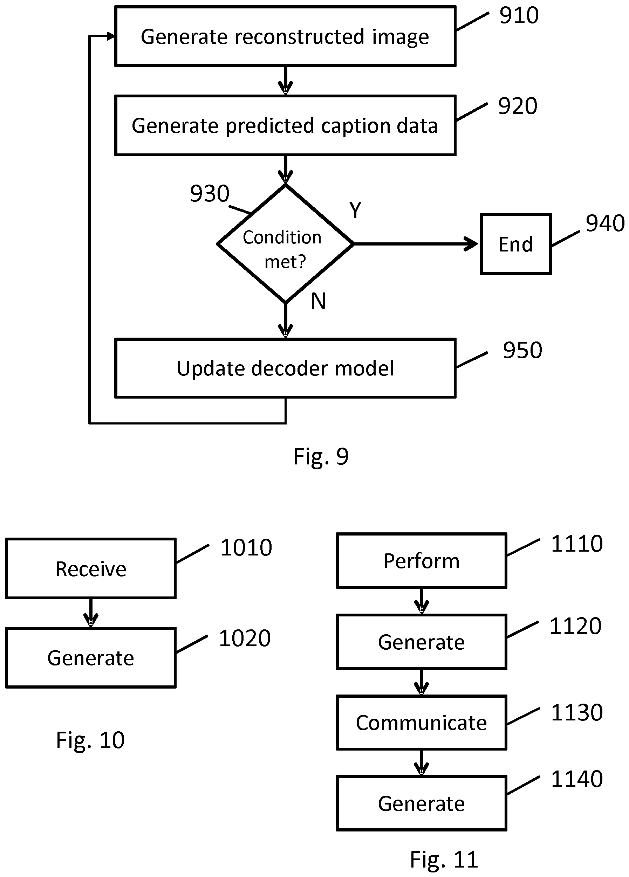

Figure 9 schematically illustrates a method of repeatedly using the decoder model 421 and the image captioning model 422. For example, the method of Figure 9 may be performed according to the arrangement shown in Figure 7 to repeat the operations shown therein. The method comprises generating (at a step 910) a reconstructed image in dependence on received encoded data. Generating (at a step 920) predicted caption data for the reconstructed image generated at the step 910. Detecting (at a step 930) whether a condition is met. If the condition is met, the method proceeds to the step 940 at which the reconstructed image is output by the decoder circuitry 420 and the method ends. If the condition is not met, the method proceeds to the step 950. At the step 950, the method comprises updating the decoder model 421 in dependence on one or more differences between the predicted caption data generated at the step 920 and the initial caption data associated with the encoded data. The method then returns to the step 910. The processing steps 910 and 920 can thus be repeated using the updated decoder model. Hence, the method can be repeated a number of times until the condition is met at the step 930. The condition used at the step 930 may be a predetermined condition specified in advance (e.g. by a developer).

More generally the trained decoder model 421 and the trained image captioning model 422 can be operable, for a same encoded data, to repeatedly generate reconstructed images (e.g. a first reconstructed image, a second reconstructed image and so on) and repeatedly generate predicted caption data (e.g. first predicted caption data, second predicted caption data and so on) for each of the reconstructed images and repeatedly update the trained decoder model until a predetermined condition is satisfied.

Hence more generally in some embodiments of the disclosure, the trained decoder model 421 and the trained image captioning model 422 are operable together to continue to generate further reconstructed images (a further reconstructed image being any reconstructed image after the first reconstructed image initially generated by the decoder model for the given encoded data) and to continue to generate further predicted caption data for each of the further reconstructed images and to continue to update the trained decoder model until a predetermined condition is satisfied.

In some embodiments of the disclosure, the predetermined condition comprises one of more of: i) whether a predetermined number of reconstructed images have been generated; and ii) whether a difference between predicted caption data (e.g. first predicted caption data, second predicted caption data and so on) and the received caption data is less than a threshold difference.

Hence, the predetermined condition may comprise whether a predetermined number of reconstructed images have been generated. In this way, the method of Figure 9 may be controlled so as to be performed at least a predetermined number of times. A developer may freely choose a number of iterations to be used, with a smaller number of iterations requiring less processing but potentially at the cost of reduced accuracy. In some embodiments of the disclosure, the decoder apparatus 400 may be provided as part of a server device. Therefore, the method of Figure 9 may in some cases be performed at a server. More generally, computational power associated with a processing device (e.g. server) comprising the decoder apparatus may be suitable for permitting a number (e.g. two or a potentially large number of the order of tens of even hundreds, or a value there-between) of iterations to be run in a suitable time (e.g. real time or near-real-time) to converge to an improved reconstruction.

Alternatively or in addition, the predetermined condition may comprise whether a difference between respective predicted caption data and the received caption data is less than a threshold difference. For example, a threshold difference based on comparison of individual words indicated by predicted caption data and indicated by received caption data may be used. The predetermined condition may be satisfied (or put differently, met) when a difference between respective caption data and the received caption data is less than a predetermined number of words (e.g. a predetermined number in the range 1 to 5 for example). Alternatively or in addition, the comparison model 423 may use various Natural Language Processing (NLP) techniques and calculate a matching score for the predicted and received caption data, and a suitable threshold with respect to the matching score may be set. Alternatively, the predetermined condition may be satisfied (met) when there is no difference (i.e. an exact match) between respective further predicted caption data and the received caption data. In some examples, the predetermined condition may be satisfied only in response to there being no difference between respective further predicted caption data and the received caption.

Hence more generally, the decoder model 421 and the image captioning model 422 can potentially be used in an iterative manner to converge towards a reconstructed image that is an improved reconstruction for the original image. Hence, the technique of the present disclosure can use the decoder model 421 and image captioning model 422 in an iterative manner to converge towards a set of parameters for the decode model 421 that provides improved (e.g. more accurate) reconstruction.

In some embodiments of the disclosure, the decoder model 421 is operable to update at least some of the parameters in dependence on a loss function computed in dependence on the difference between the predicted caption data and the received caption data. Back propagation techniques may be used to minimise the difference between the predicted caption data and the received caption data by adjusting one or more parameters of the decoder model 421. A loss function calculated in dependence on the difference between the predicted caption data and the received caption data can be provided to the decoder model 421 for indicating adjustments of the decoder model 421 for obtaining a reconstructed image expected to be closer to the received caption data. Put differently, the adjustment to the decoder model 421 aims to minimise the loss function.

In some embodiments of the disclosure, one or more machine learning models of the decoder circuitry 420 is/are controlled using a set of learned parameters and having been initially trained using training data comprising low and high quality image pairs (e.g. low and high resolution) and corresponding captions. For example, the decoder model 421 and image captioning model 422 arrangement shown in Figure 7 may have been initially trained using a dataset of images having two or more different images qualities and corresponding captions.

Hence more generally, the decoder model 421 can be controlled using an initial set of learned parameters which have been learned through initial training and updates to one or more of the parameters can be made in response to a difference between the predicted caption data and the initial caption data to converge to an improved reconstruction for the received encoded data.

In the above mentioned techniques, the decoder circuitry 420 comprises the decoder model 421 and the image captioning model 422. However, this is not the only approach considered. As explained above with reference to Figure 7, in some cases both the encoded data and the associated caption data may be input to the decoder model 421. The decoder model 421 may be operable to directly use the caption data together with the encoded data for generating a reconstructed image. Hence, in some embodiments of the disclosure the decoder circuitry 420 comprises the decoder model 421 without requiring presence of the image captioning model 422. Hence, rather than the above mentioned repeated generating and updating of the model parameters, the decoder model 421 in this case can be operable to receive the encoded data and the associated caption data and generate the reconstructed image in dependence on the encoded data and the caption data. In this case, the decoder model 421 may be controlled using a set of learned parameters and having been initially trained using training data comprising low and high resolution image pairs and captions indicative of language-based descriptions for the image pairs to learn a function for mapping encoded data representative of a low resolution image and a corresponding caption to a high resolution image.

In the techniques of the present disclosure, the encoded data that is input to the decoder circuitry 420 may relate to a single image or a plurality of images. The encoded data may be downloaded to the decoder apparatus and/or streamed to the decoder apparatus. The encoded data may correspond to any suitable image-related content such as an individual image (e.g. a photograph), or an album of photographs, or a sequence of images associated with a video content (e.g. a movie, TV show, video clip, video game and so on). For example, the content may be a pre-recorded content (e.g. stored as a file and either downloaded or streamed) or live-streamed video content. The type of content is not particularly limited.

In some embodiments of the disclosure, the receiving circuitry 410 is operable to receive one or more data packets comprising encoded data representative of an image and the caption data indicative of the language-based description for the image. Hence, a given packet may comprise encoded data representative of an image which has been obtained by lossy compression of the image (optionally using machine learning encoding techniques) and associated caption data for use in decoding the encoded data.

In some embodiments of the disclosure, the receiving circuitry 410 is operable to receive the encoded data representative of a sequence of video images and caption data indicative of a language-based description for at least some of the sequence of video images, and the decoder circuitry 420 is operable to generate a reconstructed video image sequence in dependence on the caption data and the encoded data. The decoder apparatus 400 can thus receive a sequence of video images and associated caption data. The sequence of video images may correspond to some or all of a downloaded file or a temporal portion of a live stream. The decoder circuitry 420 is operable to use the sequence of video images and the caption data according to the techniques discussed above to generate a reconstructed image for each image in the sequence. Therefore, a sequence of reconstructed images can be generated and output according to the techniques discussed above, with the sequence of reconstructed images potentially being generated in real-time time of near-real time.

In some examples, in response to receiving encoded data representative of a sequence of video images and associated caption data, the above mentioned technique with respect to Figure 9 may be performed firstly for a first image of the sequence so as to update and refine the parameters of the decoder mode 421 for the first image. Once updated, the decoder model 421 can thus be used to also generate reconstructed images for other images in the sequence.

Alternatively, the above mentioned technique with respect to Figure 9 may be performed with respect to two or more of the images of the sequence of video images in parallel. The method of Figure 9 may be performed with respect to a respective image of the sequence and may also be performed separately and in parallel with respect to another different image of the sequence (note that the same caption data is associated with and applicable for all of the images of the sequence). For example, once the decoder model 421 generates a reconstructed image for one of the images of the sequence, the decoder model 421 may then proceed to generate a reconstructed image for another image (e.g. a subsequent image) of the sequence so that a period of time in which the decoder model 421 may have otherwise been waiting can instead be used for generating another reconstructed image and which is suitable for updating the parameters of the model to converge to an improved reconstruction for the sequence.

As explained previously, the associated caption data provides additional information for the encoded data in the form of a language based description (which may include temporal information and/or contextual information). This can permit use of a potentially highly compact encoded representation for one or more images, with the associated caption data providing additional information for assisting the decoder apparatus 400 in generating reconstructed images with an improved quality (e.g. image resolution). In the case of receiving encoded data representative of a sequence of video images, then caption data may comprise language-based descriptions providing visual description for one or more of temporality of events/actions and/or contextual description. For example, in the case of a content such as a video game or movie, the caption data may comprise a language-based description regarding properties of a character (which may be a real person or a virtual character) such as their facial expression, posture and/or movements. For example, the caption data may be indicative of words such as passionate, intense, emotional, raging, searing, hot, sultry, bleak, gloomy, dismal, sombre, miserable, dreary, glum, sullen, grim and so on for describing a character in one or more images. As explained above, such caption data can be generated by the image captioning model 320 at an encoder, and the image captioning model 420 of the decoder 400 can similarly be capable of generating such caption data in dependence on a reconstructed image. It will be appreciated that these descriptive examples illustrate that provision of a language-based description can be a particularly powerful accompaniment for the encoded data which can assist in better guiding the decoder circuitry 420 to generate reconstructed images, Furthermore, it will be appreciated that such a language-based description may require a relatively small amount of data.

In some embodiments of the disclosure, a system is provided which comprises the encoder apparatus 300 and the decoder apparatus 400, in which the encoder apparatus 300 comprises the encoder circuitry 310, the image captioning model 320 and the communication circuitry 330, and in which the encoder circuitry 310 comprises a trained encoder model operable to perform the lossy compression of an image to generate the encoded data representative of the image; in which the decoder apparatus 400 comprises the receiving circuitry 410 and the decoder circuitry 420, and in which the decoder circuitry 420 comprises the trained decoder model 421.

As explained previously with respect to Figure 3, the trained encoder model may comprise a compressive neural network for generating the encoded data and the trained decoder model may comprise a corresponding de-compressive neural network. Generally, the trained encoder model can be operable to provide the encoded data as a lower-dimensional representation and the trained decoder model can be operable to reconstruct an image therefrom. Hence more generally, the encoder apparatus 300 and the decoder apparatus 400 may comprise a trained encoder model (i.e. ML encoder model) and a trained decoder model (i.e. ML decoder model), respectively, which have been trained to work together. Therefore, encoded data that has been obtained by lossy compression of an image by the trained encoder model can be provided to the trained decoder model and the trained decoder model has been trained in advance for use with the encoder model and is controlled by a set of learned parameters to generate a reconstructed image with higher image quality.

The features of the encoder apparatus 300 allow for transmission of encoded data and associated caption data and the features of the decoder apparatus 400 allow for decoding of such data to obtain reconstructed images of an enhanced image quality comparative to a case for which the caption data is not present. Of course, whilst the features of the encoder apparatus 300 allow for transmission of such data and the features of the decoder apparatus 400 allow for reconstruction of images, in some cases a respective data processing device may comprise a combination of the encoder apparatus 300 and the decoder apparatus 400 for allowing reception and transmission by the respective data processing according to the techniques discussed above.

In some embodiments of the disclosure, the encoded data may be communicated between the encoder apparatus 300 and the decoder apparatus 400 using one or more data packets. One or more of the data packets may comprise one or more of encoded data generated by the encoder model and caption data generated by the image captioning model 320. Hence, in some embodiments a respective data packet may comprise at least some of the encoded data for a respective image and caption data for the respective image.

In some embodiments of the disclosure, the communication circuitry 330 may be operable to packetize at least some of the communications. In particular, the communication circuitry 330 may be operable to transmit a packet comprising encoded data representative of an image (or a plurality of images) and caption data generated for that image (or the plurality of images) by the image captioning model 320.

Referring now to Figure 10, in embodiments of the disclosure a computer-implemented method comprises:
receiving (at a step 1010) caption data indicative of a language-based description for a first image and encoded data representative of the first image;
generating (at a step 1020), by decoder circuitry comprising one or more trained machine learning models, a reconstructed image in dependence on the caption data and the encoded data, the reconstructed image having a higher image quality than an image quality associated with the encoded data representative of the first image.

The method of Figure 10 may be performed by the decoder apparatus 400 discussed previously.

Referring now to Figure 11, in embodiments of the disclosure a computer-implemented method comprises:
performing (at a step 1110), by a trained encoder model, lossy compression of a first image to generate encoded data representative of the first image;
generating (at a step 1120), by a trained image captioning model, caption data indicative of a language-based description for the first image;
communicating (at a step 1130) the encoded data and the caption data to a decoder apparatus via a network, the decoder apparatus comprising decoder circuitry comprising one or more trained machine learning models; and
generating (at a step 1140), by the decoder circuitry, a reconstructed image in dependence on the caption data and the encoded data, the reconstructed image having a higher image quality than an image quality associated with the encoded data representative of the first image.

It will be appreciated that example embodiments can be implemented by computer software operating on a general purpose computing system such as a games machine. In these examples, computer software, which when executed by a computer, causes the computer to carry out any of the methods discussed above is considered as an embodiment of the present disclosure. Similarly, embodiments of the disclosure are provided by a non-transitory, machine-readable storage medium which stores such computer software.

Thus any required adaptation to existing parts of a conventional equivalent device may be implemented in the form of a computer program product comprising processor implementable instructions stored on a non-transitory machine-readable medium such as a floppy disk, optical disk, hard disk, solid state disk, PROM, RAM, flash memory or any combination of these or other storage media, or realised in hardware as an ASIC (application specific integrated circuit) or an FPGA (field programmable gate array) or other configurable circuit suitable to use in adapting the conventional equivalent device. Separately, such a computer program may be transmitted via data signals on a network such as an Ethernet, a wireless network, the Internet, or any combination of these or other networks.

It will also be apparent that numerous modifications and variations of the present disclosure are possible in light of the above teachings. It is therefore to be understood that within the scope of the appended claims, the disclosure may be practised otherwise than as specifically described herein.

## Claims

1. A decoder apparatus comprising:
receiving circuitry to receive caption data indicative of a language-based description for a first image and encoded data representative of the first image; and
decoder circuitry comprising one or more trained machine learning models operable to generate a reconstructed image in dependence on the caption data and the encoded data, the reconstructed image having a higher image quality than an image quality associated with the encoded data representative of the first image.

2. The decoder apparatus according to claim 1, wherein the decoder circuitry comprises a trained decoder model operable to receive the encoded data and generate the reconstructed image and a trained image captioning model operable to receive the reconstructed image and generate predicted caption data for the reconstructed image.

3. The decoder apparatus according to claim 2, wherein the decoder circuitry is operable to output the reconstructed image in dependence on a comparison of the predicted caption data for the reconstructed image and the received caption data.

4. The decoder apparatus according to claim 2 or claim 3, wherein the trained decoder model is controlled using a set of learned parameters and the trained decoder model is operable to update one or more of the parameters in dependence on a difference between the predicted caption data for the reconstructed image and the received caption data.

5. The decoder apparatus according to claim 4, wherein the trained decoder model is operable to update one or more of the parameters of the trained decoder model to update the trained decoder model to compensate for differences between the predicted caption data for the reconstructed image and the received caption data.

6. The decoder apparatus according to claim 4 or claim 5, wherein the trained decoder model is operable to generate another reconstructed image in dependence on the encoded data using updated parameters.

7. The decoder apparatus according to any one of claims 4 to 6, wherein the trained decoder model and the trained image captioning model are operable together to continue to generate further reconstructed images and to continue to generate further predicted caption data for each of the further reconstructed images and to continue to update the trained decoder model until a predetermined condition is satisfied.

8. The decoder apparatus according to claim 7, wherein the predetermined condition comprises one of more of whether a predetermined number of reconstructed images have been generated and whether a difference between respective further predicted caption data and the received caption data is less than a threshold difference.

9. The decoder apparatus according to any one of claims 4 to 8, wherein the trained decoder model is operable to update at least some of the parameters in dependence on a loss function computed in dependence on the difference between the predicted caption data and the received caption data.

10. The decoder apparatus according to claim 1, wherein the decoder circuitry comprises a trained decoder model operable to receive the encoded data and the caption data and generate the reconstructed image in dependence on the encoded data and the caption data.

11. The decoder apparatus according to claim 10, wherein the trained decoder model is controlled using a set of learned parameters and having been initially trained using training data comprising low and high resolution image pairs and captions indicative of language-based descriptions for the image pairs to learn a function for mapping encoded data representative of a lower resolution image and a corresponding caption to a higher resolution image.

12. The decoder apparatus according to any preceding claim, wherein the receiving circuitry is operable to receive the encoded data representative of a sequence of video images and caption data indicative of a language-based description for at least some of the sequence of video images, and the decoder circuitry is operable to generate a reconstructed video image sequence in dependence on the caption data and the encoded data.

13. A system comprising:
the decoder apparatus according to any preceding claim; and
an encoder apparatus, the encoder apparatus comprising:
encoder circuitry comprising a trained encoder model operable to perform lossy compression of the first image to generate the encoded data representative of the first image;
a trained image captioning model operable to generate the caption data indicative of the language-based description for the first image; and
communication circuitry to communicate the encoded data and the caption data to the decoder apparatus via a network.

14. A computer-implemented method comprising:
receiving caption data indicative of a language-based description for a first image and encoded data representative of the first image; and
generating, by decoder circuitry comprising one or more trained machine learning models, a reconstructed image in dependence on the caption data and the encoded data, the reconstructed image having a higher image quality than an image quality associated with the encoded data representative of the first image.

15. Computer software which, when executed by a computer, causes the computer to perform the method of claim 14.
